Europäisches Patentamt

**European Patent Office**

Office européen des brevets

(11) Numéro de publication: **0 359 601**
**A1**

# (12) DEMANDE DE BREVET EUROPEEN

(21) Numéro de dépôt: **89402139.3**

(22) Date de dépôt: **27.07.89**

(51) Int. Cl.⁵: **B 21 D 37/20**
**B 29 C 33/38**

(30) Priorité: **02.08.88 FR 8810422**
**14.12.88 FR 8816466**

(43) Date de publication de la demande:
**21.03.90 Bulletin 90/12**

(84) Etats contractants désignés: **DE ES GB IT NL**

(71) Demandeur: **SOCIETE ANONYME DES USINES
CHAUSSON
11 avenue Dubonnet
F-92400 Courbevoie (FR)**

(72) Inventeur: **Gorin, Gilbert Alfred Fernand
1 avenue Becquerelle "Le Miroir"
F-92600 Asnieres (FR)**

(74) Mandataire: **Madeuf, René Louis et al
Cabinet Madeuf Conseils en Propriété Industrielle 3,
Avenue Bugeaud
F-75116 Paris (FR)**

(54) **Procédé pour la fabrication d'outils de formage, notamment d'emboutissage, de détourage et autres, de pièces en tôle métallique.**

(57) On mélange au moins une résine et son durcisseur ; on additionne à ce mélange une charge pulvérulente siliceuse, le rapport pondéral entre la résine et son durcisseur, d'une part, et la charge, d'autre part, étant déterminé pour qu'au cours d'un malaxage, ladite résine soit encore exempte en partie au moins de macromolécules, mais qu'elle mouille les grains de la charge et remplisse les interstices séparant lesdits grains sans créer de matelas fléchissants entre ceux-ci ; on coule le béton dans un coffrage contenant des pièces travaillantes ou des éléments de moulage.

FIG.1

EP 0 359 601 A1

**Description**

### Procédé pour la fabrication d'outils de formage, notamment d'emboutissage, de détourage et autres, de pièces en tôle métallique

La présente invention concerne la fabrication d'outils de formage, notamment d'emboutissage et analogues destinés à être montés sur des presses pour la mise en forme de tôles métalliques, pour le détourage de pièces réalisées, ainsi que pour d'autres opérations devant être effectuées à la presse.

L'invention concerne essentiellement la fabrication de béton pour outils de formage tout en béton et aussi d'outils composites, c'est-à-dire des outils qui comportent des parties travaillantes en métal ou autres matières appropriées et résistantes à l'usure, ces parties travaillantes étant supportées et ancrées dans une masse résineuse.

Les outils de ce type sont utilisables essentiellement pour la réalisation de quelques prototypes et en les mettant en oeuvre sur des presses hydrauliques pour éviter qu'ils soient soumis à des chocs pouvant provoquer la rupture de la masse résineuse.

L'invention crée un nouveau procédé de fabrication de bétons et d'outils qui rend possible la réalisation d'outils composites utilisables sur des presses mécaniques à cadence de travail élevée, par exemple 18 à 20 cycles par minute, au lieu de 2 à 3 pour une presse hydraulique. Les outils selon l'invention permettent en outre des fabrications de l'ordre de 100 000 pièces, de sorte qu'ils sont utilisables pour des productions en petites et moyennes séries. Le procédé de l'invention permet l'obtention d'outils pouvant subir des opérations de rectification par usinage mécanique, de même que des réparations par recharges, ce qui autorise la réalisation de modifications subtantielles.

Un autre avantage de l'invention réside dans le fait que certaines des parties travaillantes de l'outil peuvent être en résines dont les qualités sont alors mises à profit pour permettre le glissement de certaines parties d'un flan métallique devant être mis en forme sans qu'il en résulte de déchirures ou d'amincissements excessifs des parties étirées.

L'invention rend également possible la réalisation d'outils complexes permettant d'assurer le tombage des bords de pièces embouties et le soyage de ceux-ci.

Conformément à l'invention, le procédé pour la fabrication de béton de résine destiné à la réalisation d'outils de formage, d'emboutissage, de détourage et autres traitements de pièces en tôle métallique est caractérisé en ce qu'on mélange au moins une résine et son durcisseur, en ce qu'on additionne à ce mélange une charge pulvérulente siliceuse, le rapport pondéral entre la résine et son durcisseur, d'une part, et la charge, d'autre part, étant déterminé pour qu'au cours d'un malaxage, dont la durée est déterminée en fonction de la température de travail, ladite résine soit encore en partie au moins exempte de macromolécules, mais qu'elle mouille les grains de la charge et remplisse les interstices séparant lesdits grains sans créer de matelas fléchissants entre ceux-ci et en ce qu'on coule le béton dans un coffrage contenant des pièces travaillantes ou des éléments de moulage.

Diverses autres caractéristiques de l'invention ressortent d'ailleurs de la description détaillée qui suit.

Des formes d'exécution de l'objet de l'invention sont représentées, à titre d'exemples non limitatifs, aux dessins annexés.

La fig. 1 est une coupe-élévation schématique d'un outil d'emboutissage réalisé conformément à l'invention.

La fig. 2 est une coupe-élévation schématique analogue à la fig. 1 d'un outil d'emboutissage complémentaire à celui de la fig. 1.

La fig. 3 est une coupe-élévation schématique d'un outil emboutissage suivant une variante.

La fig. 4 est une coupe-élévation schématique partielle très agrandie d'un détail de réalisation.

La fig. 5 est une coupe-élévation partielle illustrant une autre variante.

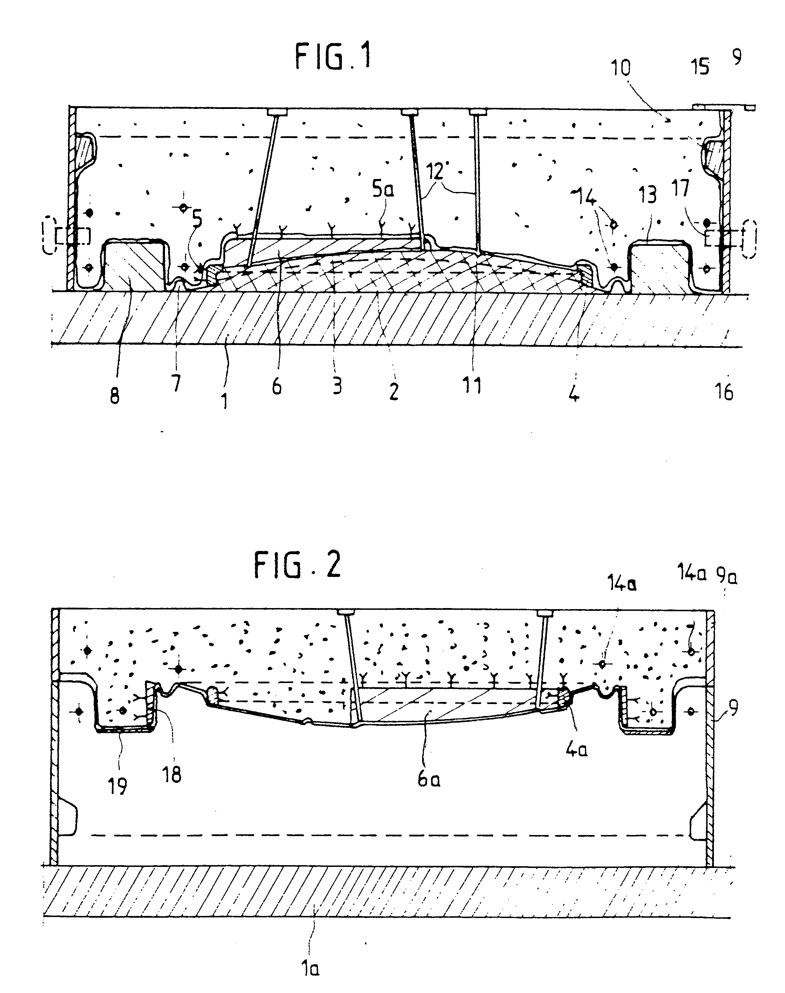

Dans ce qui suit, pour illustrer l'objet de l'invention, on a représenté à la fig. 1 une matrice d'emboutissage et à la fig. 2 un poinçon d'emboutissage destiné à coopérer avec la matrice de la fig. 1.

Les opérations de fabrication sont décrites successivement dans ce qui suit pour l'un et l'autre outils, afin de montrer l'identité de leur fabrication.

A la fig. 1, 1 désigne un marbre sur lequel on place un modèle de référence 2 réalisé par exemple en bois, notamment en bois d'aulne, recouvert d'un organe de revêtement, notamment une tôle. Le modèle de référence 2 est fixé sur le marbre 1, par exemple au moyen d'éléments adhésifs non représentés mais permettant son retrait après la réalisation de l'outil. La tôle de recouvrement 3 est choisie d'une épaisseur correspondant à celle devant être travaillée par l'outil. On ajoute ensuite sur le modèle de référence 2 des inserts métalliques 4 préalablement munis de pattes de scellement 5.

Lors de la réalisation des inserts, il y a lieu de prendre soin que toutes les arêtes dirigées vers l'intérieur de l'outil et devant être scellées dans un béton plastique décrit dans ce qui suit, soient abattues et arrondies, afin que les efforts transmis aux inserts métalliques lors du travail ultérieur de l'outil soient répartis sur une surface aussi importante que possible et qu'il n'existe aucun bord tranchant entre les inserts et le béton de résine.

De manière analogue, on met en place sur le modèle de référence les futures parties travaillantes, dont l'une, désignée par la référence 6, est constituée par un médaillon pouvant être réalisé en fonte approchée ou en une autre matière appropriée. De même qu'en ce qui concerne les inserts, des pattes de scellement 5a font saillie des parties travaillantes 6 devant être en contact avec le béton de résine.

Un boudin de retenue 7, par exemple un jonc, est disposé autour du modèle de référence 2 pour la délimitation ultérieure d'une rainure de retenue d'un flan en tôle devant être travaillé. Le boudin de retenue 7 est placé directement sur le marbre 1 de la même façon qu'une clé périphérique 8 destinée à délimiter un évidement dans l'outil réalisé. On met ensuite en place sur le marbre un coffrage 9 pouvant être en bois et destiné à délimiter la paroi externe de l'outil. Le coffrage 9 est éventuellement muni sur sa paroi interne de différents accessoires, par exemple une ceinture ou des plots 10, destinés à délimiter une rainure ou des niches de bridage de l'outil sur la presse devant l'actionner. Le coffrage 9 est réalisé de façon très rigide pour ne pas subir de déformation lors de la coulée du béton plastique.

Outre ce qui précède, des trous, tels que celui désigné par 11, sont prévus au moins dans la tôle du modèle de référence 2 et des tubes 12 sont engagés dans ces trous pour s'étendre sensiblement jusqu'au sommet du coffrage 9. Les trous 11 et les tubes 12 sont destinés à permettre l'évacuation de l'air emprisonné entre les outils coopérants de travail lors de l'exécution des cycles d'emboutissage.

Lorsque les différentes pièces décrites ci-dessus, ainsi que tous autres accessoires nécessaires, sont mis en place, les parois apparentes tant des pièces et accessoires que les parois internes du coffrage 9 sont revêtues d'un produit de démoulage, par exemple une cire.

Une opération suivante de fabrication consiste à appliquer, sur les parois internes du coffrage et sur les pièces et accessoires qu'il contient, une couche de surface 13 ou "gel-coat" réalisée avantageusement en résine éthoxyline de préférence celle connue sous la marque Araldite mélangée avec un durcisseur compatible. Des résultats particulièrement satisfaisants ont été obtenus en réalisant la couche de surface 13 par application de deux couches successives d'un mélange d'Araldite de type SW 419 et d'un durcisseur de type HV 419 fabriqués tous deux par la compagnie CIBA-GEIGY. La proportion de durcisseur était de 13 + 0,5 parties en poids pour 100 parties en poids d'Araldite. L'application des secondes couches de surface fut effectuée dès que la première couche atteignit un stade de polymérisation correspondant à un état poisseux.

Une opération suivante consiste à revêtir la couche de surface réalisée dont l'épaisseur est de préférence comprise entre 0,5 et 2,5 mm d'une couche de liaison qui est également appliquée dès que la couche de surface atteint un état poisseux.

Des résultats particulièrement satisfaisants furent obtenus en réalisant la couche de liaison pour qu'elle contienne 100 parties en poids d'Araldite de type SW 419, 15 + 0,5 partie en poids du durcisseur de type HM et 25 + 10 parties en poids de poudre d'ardoise d'une granulométrie comprise entre 0,4 et 3 mm, une granulométrie voisine de 0,5 mm étant préférée.

Pour remplir le volume demeurant libre à l'intérieur du coffrage, on utilise un béton composite de résine dénommé dans ce qui suit béton de remplissage.

Un béton de remplissage ayant donné particulièrement satisfaction était constitué de la façon suivante :
Araldite CY 219 = 100 parties en poids
durcisseur HM 50 + 1 partie en poids
sable référence G2 650 + 50 parties en poids
sable référence F35 650 + 50 parties en poids

L'Araldite CY 219 de même que le durcisseur HM sont des produits commercialisés par la société CIBA-GEIGY, tandis que le sable référence G2 est un sable de silice de quartz contenant des grains répartis de la façon suivante :
5 % grains de 1,25 à 1,60 mm
25 % -id- 1 à 1,25 mm
45 % -id- 0,8 à 1 mm
15 % -id- 0,63 à 0,8 mm
10 % -id- 0,5 à 0,63 mm

Un sable ayant donné particulièrement satisfaction est commercialisé par la société SILICE ET KAOLIN et présente les propriétés physiques et chimiques suivantes :

### Propriétés physiques

| | |
|---|---|
| Masse volumique réelle | 2,65 à 2,7 |
| Masse volumique apparente non tassée | 1,3 à 1,5 |
| Point de fusion | 1.750°C environ |
| Dureté Mohs | 7 environ |
| Reprise d'humidité à 98 % d'humidité relative | inférieure à 0,03 |
| pH | 8 |
| Couleur | laiteux à beige rosé |

Propriétés chimiques

Analyse chimique en %

| | |
|---|---|
| $SiO_2$ | 98,5 à 99 |
| $Al_2O_3$ | 0,3 à 0,5 |
| Perte au feu à 800° | 0,1 à 0,2 |
| $Fe_2O_3$ | 0,2 |
| CaO + MgO | 0,15 |
| $K_2O$ $Na_2O$ | 0,20 |

Les constituants du béton de remplissage sont versés dans le coffrage 9 après malaxage pendant une durée permettant à la résine de mouiller et de remplir complètement les interstices des grains de sable mais le malaxage est interrompu avant l'amorce d'une polymérisation susceptible d'entrainer la rupture physique des macromolécules créés.

Il est apparu que le malaxage du composite résine-sable ne devait pas excéder une durée de 15 mn à une température de travail de 16°C, le temps de malaxage étant réduit à une durée inférieure, de l'ordre de 10 mn pour une température de 19 à 20°C.

Le béton de remplissage préparé est versé, soit en continu, soit en fractions successives et au fur et à mesure du remplissage du coffrage 9. Des éléments de renfort 14, par exemple des fers à béton, sont mis en place dans ledit coffrage pour constituer des renforts analogues à l'armature d'une construction en béton devant travailler essentiellement à la compression.

Après remplissage du coffrage 9, l'ensemble de l'outil réalisé est maintenu stable sur le marbre 1 pendant une durée suffisante pour que la polymérisation de la résine lui confère une résistance convenable. A la température de 16°C et dans les conditions exposées dans ce qui précède, un temps de repos de 24 heures est apparu suffisant. A l'issue de ce temps de repos, le coffrage 9 peut être retiré s'il y a lieu qu'il soit réutilisé, mais la polymérisation du béton de résine doit de préférence être poursuivie sans déplacement dudit outil pendant au moins une nouvelle période de 24 heures. Si on le désire, la polymérisation peut être accélérée en soumettant l'outil à un étuvage à une température correspondant à celle généralement utilisée pour le traitement des résines Araldite.

Le durcissement pour l'obtention d'une polymérisation complète lorsque l'outil est maintenu à la température de 16°C est d'environ 7 jours.

La fig. 2 illustre schématiquement la réalisation d'un poinçon à partir de la matrice obtenue comme décrit dans ce qui précède. La matrice déjà polymérisée au moins partiellement, c'est-à-dire après une durée d'au moins environ 24 heures, est usinée sur son dessus pour présenter un dessus plan, ou des cales de repérage 15 (fig. 1) sont formées avant que la matrice soit soulevée du marbre 1 pour délimiter un plan de référence dont la position géométrique est parfaitement connue. Un dégauchissage par addition d'une résine de surface peut aussi être effectué. Après retournement, la matrice est placée sur un marbre 1a (fig. 2) qui peut être celui sur lequel elle a été réalisée. Le retournement est exécuté en se servant de pattes de manutention 16 (fig. 1) mises en place dans le béton de remplissage dans des évidements 17 ménagés à cet effet par des douilles préalablement disposées dans le coffrage 9 ou par tous autres moyens connus de la technique.

De la même façon qu'en ce qui concerne la matrice, pour réaliser le poinçon, on met en place des inserts 4a et des parties travaillantes 6a et éventuellement des barreaux 18 lorsqu'il y a lieu, comme dans l'exemple illustré par les fig. 1 et 2, que l'outil réalise non seulement l'emboutissage d'une pièce mais également le tombage de bords et leur soyage. D'autres accessoires peuvent, comme précédemment, être mis en place notamment des habillages 19 destinés à laisser libres des espaces d'étendues déterminées entre le poinçon et la matrice.

De la même façon que décrite dans ce qui précède, la surface du poinçon est réalisée par un "gel-coat" constitué par de l'Araldite et son durcisseur mis en place en une ou plusieurs couches, puis comme précédemment une couche de liaison constituée par de la résine additionnée de poudre minérale de préférence une poudre d'ardoise, constitue une couche intermédiaire avant la mise en place du béton de remplissage dans un coffrage 9a disposé sur le coffrage 9 retourné comme expliqué dans ce qui précède.

Des éléments de renfort 14a, par exemple des fers à béton, sont mis en place au fur et à mesure de la coulée du béton de remplissage.

Pour illustrer l'invention, on donne ci-après un exemple de préparation des différentes résines et bétons de résine mis en oeuvre.

## EXEMPLE

On projeta sur l'agent de démoulage recouvrant le coffrage 9 et les différentes pièces et accessoires contenues dans ce coffrage tels que décrits en référence à la fig. 1 une première couche de surface (gel-coat), constituée d'Araldite SW 419 représentant 100 parties en poids additionnée du durcisseur HV 419 représentant 13 parties en poids, de la société CIBA-GEIGY, à la température de 16°C pour réaliser une

4

première couche d'une épaisseur d'environ 0,4 à 0,8 mm. Dès que cette première couche devint poisseuse, une seconde couche fut projetée. La seconde couche fut projetée essentiellement sur les parties travaillantes de l'outil non munies d'inserts métalliques et non munies de parties travaillantes rapportées. Dès que la seconde couche devint poisseuse, une épaisseur d'environ 0,5 à 1 mm d'une couche de liaison fut étendue par projection sur l'ensemble des surfaces internes du coffrage 9. La couche de liaison était constituée par de l'Araldite SW 419 et le durcisseur HM de la société CIBA-GEIGY respectivement pour 100 parties en poids et 15 parties en poids.

Dès que la couche de liaison ci-dessus prit une consistance pâteuse, on procèda au remplissage du coffrage 9 en béton de résine obtenu comme suit : On prépara tout d'abord le liant constitué par 8 kg de résine Araldite CY 219 et de 4 kg de durcisseur HM de la société CIBA-GEIGY, puis ce liant fut versé dans une mélangeuse dans laquelle on versa successivement des fractions de 5 à 10 kg de sable de référence G2 de la société SILICE ET KAOLIN suivant la composition exposée dans ce qui précède et des fractions de 5 à 10 kg de sable F35 de la même société, constituées également par des silices de quartz, mais comportant 5 % de grains compris entre 0,8 et 1 mm, 35 % de grains compris entre 0,630 et 0,80 mm, 35 % de grains compris entre 0,50 et 0,630 mm et 15 % de grains compris entre 0,40 et 0,50 mm.

La quantité de chacun des deux sables utilisés fut de 50 kg. Le composite résine-sable fut malaxé pendant 15 mn puis versé en couches successives d'épaisseurs régulières à l'intérieur du coffrage 9, tout en procédant à un tassage soigné. On plaça sur le dessus de la dernière couche de béton de remplissage des baguettes de bois pour délimiter des évidements de passages d'air à l'aboutissement des tubes 12 de purges d'air décrits en référence à la fig. 1, puis on étendit une couche de résine Araldite pour parfaire le dégauchissage de la surface de l'outil qui fut ensuite maintenu au repos pendant 48 heures à la température constante de 16° pour obtenir une polymérisation suffisante permettant sa manutention.

Dans d'autres exemples qui furent effectués, on constata que l'augmentation du temps de malaxage pour la composition de résine et de durcisseur énoncée ci-dessus conduisait à un amoindrissement des caractéristiques de compression du béton de résine. Des essais effectués permirent d'établir les données ci-après.

Malaxage 15'

| | | | | |
|---|---|---|---|---|
| Charge max. kN | 68,3 | 75,3 | 75,7 | |
| Portance N/mm$^2$ | 37,3 | 44,9 | 44,2 | |
| Portance moyenne N/mm$^2$ | 44,5 = 4,5 kg/mm$^2$ = 454/cm$^2$ | | | |

Malaxage 30'

| | | | | |
|---|---|---|---|---|
| Charge max. kN | 66,3 | 69 | 67,6 | |
| Portance N/mm$^2$ | 40,6 | 41,7 | 40,9 | |
| Portance moyenne N/mm$^2$ | 41,1 = 4,1 kg/mm$^2$ = 419 kg/cm$^2$ | | | |

Malaxage 45'

| | | | | |
|---|---|---|---|---|
| Charge max. kN | 66,4 | 74,2 | 76,8 | 65,9 |
| Portance N/mm$^2$ | 40,8 | 45,2 | 41 | 39,8 |
| Portance moyenne N/mm$^2$ | 40,5 = 4,1 kg/mm$^2$ = 413 kg/cm$^2$ | | | |

Il fut également constaté qu'il était avantageux de ne préparer que des masses de béton de résine relativement faibles de l'ordre de 10 à 15 kg, tout en les travaillant à une température comprise entre 16 et 19°C. En effet, au-delà des masse et température ci-dessus, la polymérisation tend à être accélérée par effet de masse et réaction exothermique, ce qui conduit à réduire encore le temps de malaxage en nuisant à l'homogénéité du béton.

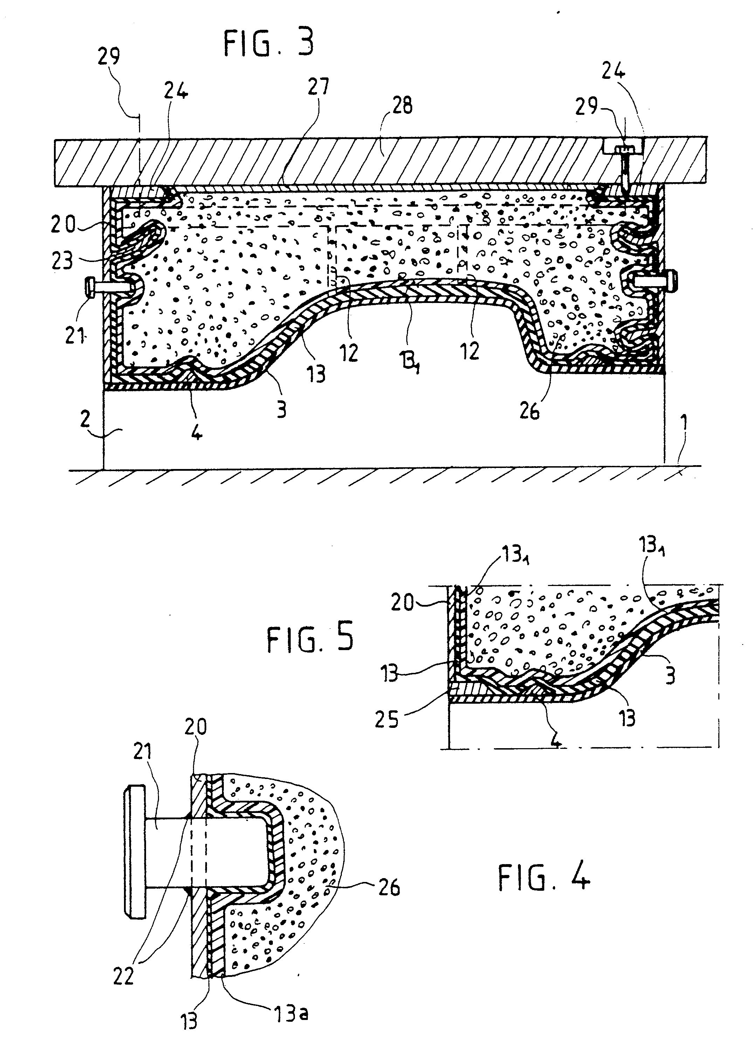

Comme dans la réalisation précédemment décrite, la fig. 3 montre, de façon schématique, un marbre 1 sur lequel est placé un modèle de référence 2 réalisé, par exemple, en bois ou constitué par un autre outil. Le modèle 2 est recouvert par un organe de revêtement 3 provisoire non compressible formant calibre dont l'épaisseur et la forme correspondent à celles d'une tôle devant être travaillée par l'outil à réaliser.

L'organe de revêtement 3 est recouvert, à sa périphérie, par un cuvelage métallique 20 formant un moule perdu et une frette. Le cuvelage 20 est muni, dans sa paroi, d'accessoires divers notamment de manilles d'élinguage 21, par exemple fixées par des soudures 22 (fig. 4).

La paroi interne du cuvelage 20 est aussi munie de pattes de scellement 23 et de taquets de fixation 24 qui sont également, de préférence soudés.

Divers organes tels que des tubes 12 d'évacuation d'air sont également mis en place à l'intérieur du cuvelage 20, ces accessoires étant ceux qui sont connus dans la technique, par exemple, des inserts métalliques 4 prenant appui directement sur l'organe de revêtement 3.

La paroi interne du cuvelage 20 est dégraissée, éventuellement décapée et, de préférence, rendue rugueuse.

Dans l'exemple illustré à la fig. 3, le cuvelage 20 est mis en place pour prendre appui directement sur la périphérie de l'organe de revêtement 3.

Lorsque les différentes pièces décrites ci-dessus sont préparées, il est procédé à l'application sur l'organe de revêtement 3 d'un produit de démoulage, par exemple une cire et on applique sur ledit organe de revêtement une première couche de surface 13 ou "gel coat" pouvant etre réalisée en plusieurs passes pour que la couche finale de surface soit bien homogène et présente une épaisseur de l'ordre de 2,5 mm.

La couche de surface ou "gel coat" 13 est également déposée sur la paroi interne du cuvelage 3 pour en recouvrir toutes les parties ainsi, de préférence, que tous les accessoires et y adhérer intimement.

La couche de surface déposée à l'intérieur du cuvelage 20 peut ne présenter qu'une épaisseur comprise entre 0,6 et 2 mm.

La couche de surface 13 est réalisée comme expliqué précédemment en relation aux fig. 1 et 2 par exemple en résine éthoxyline notamment celle connue sous la marque "Araldite" mélangée à un durcisseur compatible.

La couche de surface 13 est ensuite revêtue d'une couche de liaison $13_1$ analogue à celle déjà décrite et contenant par exemple 100 parties en poids d'Araldite, 15 + 0,5 % parties en poids de durcisseur et 10 parties en poids d'une poudre d'ardoise.

La couche de liaison $13_1$ présente une épaisseur de l'ordre de 3 mm et est, de préférence, appliquée en deux passes, la première passe étant effectuée alors que la couche de surface 13 est encore poisseuse.

La fig. 5 illustre une variante selon laquelle le cuvelage 20 est isolé de l'organe de revêtement 3 par un joint détachable 25 en mousse ou en cire ou en une autre matière appropriée. Le joint 25 peut être réalisé en plusieurs couches pour faciliter sa réalisation et le réglage de la position du cuvelage 20.

Le volume demeurant libre à l'intérieur du cuvelage est rempli d'un béton composite 26 de composition analogue à celui décrit dans ce qui précède, c'est-à-dire par une résine Araldite, un durcisseur et des charges siliceuses.

Une charge appropriée comprend pour moitié un sable de silice comprenant 5 % en poids de particules de granulométrie comprise entre 1,25 à 1,6 mm, 25 % en poids de particules de granulométrie comprise entre 1 et 1,25 mm, 45 % en poids de particules de granulométrie comprise entre 0,8 et 1 mm, 15 % en poids de particules de granulométrie comprise entre 0,63 et 0,8 mm, 10 % en poids de particules de granulométrie comprise entre 0,5 et 0,63 mm et un sable de silice comprenant 5 % en poids de particules de granulométrie comprise entre 0,8 et 1 mm, 35 % en poids de particules de granulométrie comprise entre 0,630 et 0,8 mm, 35 % en poids de particules de granulométrie comprise entre 0,5 et 0,630 mm, 15 % en poids de particules de granulométrie comprise entre 0,4 et 0,5 mm et 10 % en poids de granulométrie comprise entre 0,315 et 0,4 mm.

Après coulée du béton composite 26, la surface libre de celui-ci est revêtue d'une couche 27, dite de dégauchissage, réalisée en résine Araldite ou autre matière analogue compatible faisant que le dessus de l'outil est coplanaire aux surfaces libres des taquets de fixation qui permettent ensuite, après durcissement, de fixer l'outil muni du cuvelage 20 constituant un moule perdu à une semelle 28 au moyen de boulons 29 ou autres organes appropriés, la semelle 28 permettant d'assurer le montage de l'outil sur une presse.

Dans tous les cas, cependant, il est préféré que la couche de surface 13 qui constitue une couche travaillante soit plus épaisse que celle revêtant la paroi interne du cuvelage.

Il est avantageux que le béton composite 26 soit compacté en même temps qu'il est coulé dans le cuvelage 20 pour exercer sur celui-ci une précontrainte faisant que ledit cuvelage agit ensuite comme une frette maintenant sous précontrainte le coeur de l'outil constitué par le béton composite polymérisé.

Après montage de l'outil sur la semelle 28, le joint 25 est retiré, ce qui crée un dégagement périphérique permettant de limiter la partie travaillante aux dimensions du plan.

Les résines Araldite énoncées dans ce qui précède peuvent être remplacées par des résines analogues pour autant que lesdites résines assurent un mouillage convenable de la charge et un remplissage des interstices séparant les grains de ladite charge sans que lesdites résines forment un matelas fléchissant entre lesdits grains. Des pièces ou parties travaillantes rapportées peuvent aussi être réalisées en d'autres matières que le métal, des résines synthétiques, des élastomères chargés ou non, des fibres de synthèse, etc, peuvent être mis en oeuvre pour être adaptés à un travail particulier d'une partie de l'outil. De même, par charge siliceuse énoncée dans ce qui précède et dans les revendications, il faut entendre une charge mouillable par les résines utilisées et présentant la caractéristique d'être incompressible aux pressions de travail des outils concernés.

## Revendications

1 - Procédé pour la fabrication d'outils de formage, notamment d'emboutissage, de détourage et autres de pièces en tôle métallique, les outils contenant un béton de résine, caractérisé en ce qu'on mélange au moins une résine et son durcisseur, en ce qu'on additionne à ce mélange une charge pulvérulente siliceuse, le rapport pondéral entre la résine et son durcisseur, d'une part, et la charge, d'autre part, étant déterminé pour qu'au cours d'un malaxage, dont la durée est déterminée en fonction de la température de travail, ladite résine soit encore exempte en partie au moins de macromolécules, mais qu'elle mouille les grains de la charge et remplisse les interstices séparant lesdits grains sans créer de matelas fléchissants entre ceux-ci et en ce qu'on coule le béton dans un coffrage contenant des pièces travaillantes ou des éléments de moulage.

2 - Procédé suivant la revendication 1, caractérisé en ce qu'on utilise une résine éthoxyline, de préférence de l'Araldite et des sables constitués par des silices de quartz.

3 - Procédé suivant l'une des revendications 1 et 2, caractérisé en ce qu'on met en oeuvre un liant contenant environ 8 kg de résine Araldite CY 219 et 4 kg de durcisseur HM de la société CIBA-GEIGY, ou leurs équivalents pour être mélangés à 100 kg d'une charge de sables de silice de quartz présentant une granulométrie comprise entre 1,25 et 0,5 mm.

4 - Procédé suivant l'une des revendications 1 à 3, caractérisé en ce que le béton de résine comporte une charge qui comprend pour moitié un sable de silice comprenant 5 % en poids de particules de granulométrie comprise entre 1,25 à 1,6 mm, 25 % en poids de particules de granulométrie comprise entre 1 et 1,25 mm, 45 % en poids de particules de granulométrie comprise entre 0,8 et 1 mm, 15 % en poids de particules de granulométrie comprise entre 0,63 et 0,8 mm, 10 % en poids de particules de granulométrie comprise entre 0,5 et 0,63 mm et un sable de silice comprenant 5 % en poids de particules de granulométrie comprise entre 0,8 et 1 mm, 35 % en poids de particules de granulométrie comprise entre 0,630 et 0,8 mm, 35 % en poids de particules de granulométrie comprise entre 0,5 et 0,630 mm, 15 % en poids de particules de granulométrie comprise entre 0,4 et 0,5 mm et 10 % en poids de granulométrie comprise entre 0,315 et 0,4 mm.

5 - Procédé suivant l'une des revendications 1 à 4, caractérisé en ce que les sables constitutifs de la charge présentent les caractéristiques physiques suivantes :

| | |
|---|---|
| Masse volumique réelle | 2,65 à 2,7 |
| Masse volumique apparente non tassée | 1,3 à 1,5 |
| Point de fusion | 1.750° C environ |
| Dureté Mohs | 7 environ |
| Reprise d'humidité à 98 % d'humidité relative | inférieure à 0,03 |
| pH | 8 |
| Couleur | laiteux à beige rosé |

6 - Procédé suivant l'une des revendications 1 à 5, caractérisé en ce que les sables présentent les propriétés chimiques suivantes :

| | |
|---|---|
| $SiO_2$ | 98,5 à 99 |
| $Al_2O_3$ | 0,3 à 0,5 |
| Perte au feu à 800° | 0,1 à 0,2 |
| $Fe_2O_3$ | 0,2 |
| CaO + MgO | 0,15 |
| $K_2O + Na_2O$ | 0,20 |

7 - Procédé suivant l'une des revendications 1 à 6, caractérisé en ce que pour la réalisation d'un outil d'emboutissage, matrice, poinçon ou analogue on met en place, sur un marbre (1), un modèle de référence (2), des parties travaillantes (6 et 6a), des boudins de retenue (7) et autres accessoires propres à ce type d'outil ou des éléments de moulage, en ce qu'on enduit le coffrage, le modèle et les accessoires ou les élements de moulage d'un produit de démoulage du genre cire puis en ce qu'on forme une couche de surface ou "gel-coat" à partir d'une résine de même nature que celle utilisée comme liant pour la constitution du béton de résine et en ce qu'on relie cette couche de surface au béton de résine lorsque ladite couche de surface atteint un état poisseux indicatif d'un début de polymérisation.

8 - Procédé suivant l'une des revendications 1 à 7, caractérisé en ce qu'on relie la couche de surface au béton de remplissage au moyen d'une couche de liaison constituée à partir d'un liant contenant une résine de même nature que celle de la couche de surface et que celle du liant du béton de remplissage mais dont la charge est constituée par une poudre d'ardoise dont la quantité pondérale est d'environ 25 + 10 parties en poids pour 100 parties en poids de résine de liaison.

9 - Procédé suivant l'une des revendications 1 à 8, caractérisé en ce que le béton de résine de remplissage est mis en place par couches successives pour enrober complètement les parties de travail ou de moulage que comporte l'outil et en ce que des éléments de renforts (14) du genre fers à béton et analogues sont mis en place au fur et à mesure de la coulée dudit béton de résine de remplissage.

10 - Procédé suivant l'une des revendications 1 à 9, caractérisé en ce que les parties de travail (6) des inserts métalliques (4) des pattes de scellement (5, 5a) et autres accessoires sont usinés ou préparés pour ne présenter aucune arête dans leurs parties en contact avec la couche de surface et/ou le béton de résine.

11 - Procédé suivant l'une des revendications 1 à 10, caractérisé en ce que la couche de surface ou "gel-coat" (13) est réalisée en deux épaisseurs au moins sur celle des parties de travail que comporte l'outil à l'exception desdites pièces métalliques ou autres matières qui constituent des pièces travaillantes.

12 - Procédé suivant l'une des revendications 1 à 11, caractérisé par l'application d'une couche de résine de dégauchissage déposée à la surface libre du béton de résine à la fin de la coulée de celui-ci.

13 - Procédé suivant l'une des revendications 1 à 12, caractérisé par des tubes d'évacuation d'air (12) mis en place entre les parties travaillantes de l'outil et la surface de celui-ci restant libre après coulée du béton de résine et la couche de dégauchissage éventuelle.

14 - Procédé suivant l'une des revendications 1 à 13, caractérisé en ce que certaines parties au moins des pièces travaillantes rapportées sont réalisées en résines synthétiques élastomères chargées ou non, fibres de synthèse et autres matières adaptées à un travail particulier d'une partie de l'outil.

15 - Procédé suivant l'une des revendications 1 à 14, caractérisé en ce que le béton de résine est préparé compte tenu de la température ambiante suivant des quantités permettant le mouillage des grains de la charge lors du malaxage avant que se produise une réaction de masse provoquant une réaction exothermique conduisant à une polymérisation partielle.

16 - Procédé suivant l'une des revendications 1 à 15, caractérisé en ce que le coffrage est réalisé sous la forme d'un cuvelage métallique (20) constituant un moule perdu dans lequel le béton composite est compacté.

17 - Procédé suivant la revendication 16, caractérisé en ce que la paroi interne du cuvelage (20) est recouverte d'une couche de surface (13), elle-même recouverte d'une couche de liaison (13a) avant la coulée du béton composite (26) formant le coeur de l'outil.

18 - Procédé suivant l'une des revendications 16 et 17, caractérisé en ce que la partie travaillante de l'outil est formée sur un modèle de référence (2) après son recouvrement par un organe de revêtement (3) formant un calibre d'épaisseur correspondant à celle d'une tôle à former et sur lequel un produit de démoulage est étendu avant le dépôt d'une couche de surface (13) et d'une couche ($13_1$) de liaison avec un béton de résine.

19 - Procédé suivant l'une des revendications 1 à 18, caractérisé en ce que la couche de surface (13) formant en partie au moins la surface travaillante de l'outil présente une épaisseur supérieure à l'épaisseur de la couche de surface revêtant la paroi interne du cuvelage (20).

20 - Procédé suivant l'une des revendications 16 à 19, caractérisé en ce que le cuvelage (20) est mis en place sur l'organe de revêtement (3) par l'intermédiaire d'un joint (25) pour la délimitation d'un dégagement périphérique.

21 - Procédé suivant l'une des revendications 1 à 20, caractérisé en ce qu'au moins la couche de surface (13) constituant en partie au moins la couche de travail de l'outil est déposée en plusieurs passes et présente une épaisseur de l'ordre de 2,5 mm.

22 - Procédé suivant l'une des revendications 1 à 21, caractérisé en ce que la couche de liaison ($13_1$) présente une épaisseur de l'ordre de 3 mm et est déposée en plusieurs passes.

23 - Procédé suivant l'une des revendications 16 à 22, caractérisé en ce que le cuvelage (20) formant moule perdu est muni d'accessoires du genre manilles d'élinguage (21), pattes de scellement (23), taquets (24) noyés en partie au moins dans la couche de surface (13), la couche de liaison ($13_1$) et le béton composite (26).

# FIG.1

# FIG.2

FIG. 3

FIG. 5

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | TECHNISCHE RUNDSCHAU, vol. 67, no. 26, 17 juin 1975, pages 9-13, Hallwag Verlag, Bern, CH; O. HAUBER: "Fertigungsmittel aus Epoxidharzen" * Figures 38-41,43,49; page 11, colonne 4 * | 1-4,16-23 | B 21 D  37/20 B 29 C   33/38 |
| X | EP-A-0 170 374  (GM CORP.) * Figure 8; page 8, lignes 7-14; page 9, lignes 4-15,16-31; page 10, lignes 12-15 * | 1-4,16-23 | |
| A | | 5-15 | |
| Y | WO-A-8 701 627  (E. SAKAI et al.) * Page 3, lignes 1-4; figure 6; revendications 1-27 * | 1-4,16-23 | |
| Y | US-A-3 239 590  (J.O. TRIMBLE) * Figures 19,20; revendication 1 * | 1-4,16-23 | |
| A | FR-A-2 598 648  (B. PERRIERE) * Revendications 1,3 * | 16,17 | DOMAINES TECHNIQUES RECHERCHES (Int. Cl.5) |
| A | DERWENT ABSTRACTS, 87-258403 C 37; & EP-A-0 237 130 (GRINT- EN ZANDEXPLO.) 16-09-1987 | 1,4-6 | B 29 C B 21 D |
| Y | FR-A-1 256 991  (CIBA) * Revendications 1-11; figures; page 2, colonne 2, lignes 32-44 * | 1-7,8, 15 | |
| Y | EP-A-0 052 380  (A. ANDERSEN) * Résumé; page 1, lignes 23-27; page 13, lignes 23-26 et 28-33; page 14, lignes 1-6; page 18, lignes 8-12; page 28, en entier; figures 8,10 * -/- | 1-7,9, 11-14 | |

Le présent rapport a été établi pour toutes les revendications

| Lieu de la recherche | Date d'achèvement de la recherche | Examinateur |
|---|---|---|
| LA HAYE | 13-11-1989 | WEINBERG J.J.M. |

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 322 898  (BAYER)<br>* Page 1, lignes 18-34; page 2, lignes 14-27,24-31; revendications 1,2 *<br>--- | 1-9,11-14 | |
| Y | FR-A-1 152 698  (THE BUDD)<br>* Figure 12; revendications A-C; page 2, lignes 12-44 *<br>--- | 1-9,13, 15 | |
| A | DE-A-  537 839  (BUDD MANUFACTURING CO.)<br>* Figures 3-5; page 3, lignes 30-36; page 5, lignes 65-75 *<br>--- | 1,10 | |
| A | US-A-3 179 725  (A.P. SHULTZ)<br>* Figure 6; revendication 1 *<br>----- | 1,13 | |

**DOMAINES TECHNIQUES RECHERCHES (Int. Cl.5)**

Le présent rapport a été établi pour toutes les revendications

| Lieu de la recherche | Date d'achèvement de la recherche | Examinateur |
|---|---|---|
| LA HAYE | 13-11-1989 | WEINBERG J.J.M. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
..........................................................................................................
& : membre de la même famille, document correspondant

EPO FORM 1503 03.82 (P0402)